# EUROPEAN PATENT APPLICATION

(11) **EP 3 654 096 A1**
(43) Date of publication of application: **20.05.2020**
(21) Application number: 18382804.5
(22) Date of filing: 15.11.2018
(51) Int. Cl.: G03B 17/08, G03B 29/00, H04N 5/225

(54) **A MOTOR VEHICLE CAMERA HOUSING ASSEMBLY**

(71) Applicant: Ficosa Adas, S.L.U., 08028 Barcelona (ES)
(72) Inventor: Alonso Oliva, Daniel, 08232 Viladecavalls (ES)
(74) Representative: ZBM Patents - Zea, Barlocci & Markvardsen

(57) **Abstract**

The housing assembly (100) comprises at least a first housing part (110), a second housing part (120), and means (200) for joining them together so as to define an inner space (130). The joining means (200) comprise an adhesive sheet material (210) wound at least once around at least one outer portion of the housing parts (110, 120), completely surrounding them to permanently join them together. For making said housing assembly at least a first and second housing parts (110, 120) are provided; said housing parts (110, 120) are brought close together; and an adhesive sheet material (210) is wound at least once around at least one outer portion of the first and second housing parts (110, 120), completely surrounding them for permanently joining them together to define an inner space (130) suitable to hold electronics components (300) therein.

## Description

The present disclosure relates to cameras for motor vehicles, and more specifically to housing assemblies for housing camera electronics components therein.

### BACKGROUND

Cameras in motor vehicles such as parking cameras typically include a housing suitable for housing camera electronics components therein. The housing generally comprises a first part or front housing and a second part or back housing. Until only some years ago, both housing parts in prior art camera housings have been generally made of plastics joined together by ultrasonic welding.

At present, motor vehicle cameras are more powerful, and often include an ECU (Electronic Control Unit) that generates great amounts of heat inside the housing. In order to dissipate heat as quickly as possible to the outside, plastics housing parts have been replaced with metal housing parts, for example made from aluminum as it is a good thermal conductor. However, a problem arises in joining aluminum housing parts together by ultrasonic welding since this kind of welding is not effective on metals.

Housings in motor vehicle cameras, whether they are made of plastic or aluminum, are manufactured by machining or by injection. Machining provides better superficial finish and thus greater accuracy, while injection is faster and more cost-efficiently but results are less accurate in terms of manufacturing tolerances which adversely affects sealing performance.

Laser welding has been an alternative to ultrasonic welding for joining aluminum housing parts together in motor vehicle cameras. However, laser welding is costly and time consuming since it usually involves of the order of a 18 second cycle for suitably joining aluminum housing parts. Welding usually involves delivery of welding material during the process. If no welding material is delivered problems usually occur due to dust and dirt resulting in that welding becomes unsatisfactory. Also, aluminum welding is likely to create micropores in the welding area which again adversely affects sealing performance.

Further approaches based on screws and rubber gaskets have been also proposed for joining metal housing parts together in order to reduce costs. However, screws and rubber gaskets undesirably take up a lot of inner space in the housing. In addition, the use of screws and rubber gaskets still involves issues derived from heat dissipation. Rubber is a thermal insulation material so heat dissipation is somewhat lower than that of welding.

The above approaches have thus found to require great space and involve increased weight rendering the assembly undesirably complex. For this reason, adhesive sheet materials such as tapes have been also used. For example, KR20160046256 discloses a camera module having a cover tape. The cover tape comprises a film member with an adhesive that is applied on one side thereof. The film member may completely close the housing of the camera module.

There is still a need for a motor vehicle camera whose housing parts can be joined together efficiently and such that the resulting housing assembly is capable of suitably withstanding heat generated by camera electronics components received therein, while weight, complexity, and costs are kept reduced.

It is thus an object of the present disclosure to provide a light, simple, and cost-effective motor vehicle camera housing assembly whose housing parts can be assembled efficiently and quickly without adversely affecting heat dissipation and good performance.

Still a further object of the present disclosure is to provide a motor vehicle camera housing assembly with improved sealing performance.

### SUMMARY

In a first aspect of the present disclosure, a motor vehicle camera housing assembly is provided, for example a housing assembly for receiving a parking camera and electronics components therein. Other types of cameras are of course not ruled out.

The present housing assembly comprises at least a first housing part and a second housing part. The first a second housing parts of the housing assembly are such that when joined together define an inner space for receiving camera electronic components therein. The first and second housing parts may be aligned with each other, that is, with their respective longitudinal axes aligned with each other. Other relative positions of the first the second housing parts may be possible such as for example substantially inclined relative to one another.

Joining means are also provided in the present housing assembly for joining the first housing part and the second housing part together so as to define the above mentioned inner space for holding electronics components therein. Said joining means advantageously may comprise an adhesive sheet material. It may be preferred that the joining means comprise a curable adhesive sheet material for example configured as a curable adhesive tape and more preferably as an extremely sealing tape. In any case, the adhesive sheet material that may have one or both opposite adhesive surfaces depending on requirements. Said adhesive sheet material is wound at least once, that is, one turn, around at least one outer portion of said first and second housing parts, completely surrounding them so as to permanently join the first and second housing parts together. It may be envisaged that the adhesive sheet material may be wound twice or more times around at least one outer portion of said first and second housing parts in order to increase strength and rigidity as required. This may be useful for example when creating a gap between the first housing part and the second housing part as it will be explained further below. In general, a single turn of the adhesive sheet material around at least one outer portion of said first and second housing parts is sufficient for ensuring proper attachment of the housing parts as well as a good sealing performance.

Within the meaning of the present disclosure, winding of adhesive sheet material around at least one outer portion of said first and second housing parts means that the sheet material is wound around an outer perimeter of the first part and/or the second housing part.

It may be preferred that at least one of the first housing part, the second housing part, and the sheet material is made from a heat dissipating material. It may be also preferred that the sheet material is made from the same material as at least one of the first and second housing parts, and most preferred from the same material as both the first housing part and the second housing part. As a result, respective coefficients of thermal expansion are all similar so that the housing assembly behaves as a block under temperature changes.

In general, it is preferred that the sheet material is made from a rigid material suitable to avoid tensile elongations. It is also preferred that the sheet material is made from a wear-resistant material. One example of a material from which the sheet material can be made is a conductive material such as a metal, for example aluminum. In general, it is preferred a material having Electromagnetic Compliance, EMC, contributing to improve building a Faraday cage. Still in some applications, the sheet material may be preferred to be made from a malleable material so as to have good surface adaptability. It is also preferred that the sheet material is made from a fluid and dust tight material. The use of a fluid and dust tight sheet material is most preferred for the purposes of reliably sealing the housing. A fluid and dust tight motor vehicle camera housing assembly is advantageously provided even in the case it is made from aluminum and also even in the case it is manufactured by injection without delivering welding material. The use of a sealing tape is advantageous for the purposes of the present camera housing assembly that is usually fitted motor vehicle body always in contact with the outside. Also, for the purposes of being applied to automotive field, the sheet material is preferred to be made from a heat-resistant material capable of withstanding temperature ranges of the order of between -40° and 150°C, and even more, and whose adhesive properties are not altered by temperature conditions within the operating range. In general, the sheet material is preferred to be resistant against attack of external agents such as chemicals, saline mist, etc.

A recess may be formed at respective end portions of the first and second housing parts. Such recess is configured for receiving the adhesive sheet material. The depth of the recess is preferred to substantially correspond to the thickness of the adhesive sheet material and specifically to the thickness of the adhesive sheet material wound a number of turns around an outer perimeter of the first part and/or the second housing part, depending on requirements. As a result of said recess, once the adhesive sheet material is placed in the recess, the adhesive sheet material does not project from the housing parts. The sheet material is advantageously applied securely to the housing assembly and it is not removed even high-pressure fluid act on the housing assembly. As a result of the provision of said recess the sheet material is not required to be necessarily a sealing material in all cases.

As stated previously, a gap may be defined by a spacing between the first housing part and the second housing part when joining them together. Said spacing between the housing parts may substantially correspond to the width of the sheet material. In practice, the spacing between the first housing part and the second housing part, if provided, is preferred to be at least slightly shorter than the width of the sheet material for ensuring suitable joining function of the housing parts.

Said gap between the first housing part and the second housing part may be of 0 mm, that is, the first housing part and the second housing part may be arranged in direct contact with each other although irregularities and/or imperfections may be present in the interface of both housing parts due to for example manufacturing injection processes.

When a gap, greater than zero, is defined between the first housing part and the second housing part in the present housing assembly, the sheet material can be caused to cure therein. This may be carried out for example by applying heat, e. g. with laser, until the housing assembly for receiving the camera therein is formed.

The sheet material may be for example 0.07 - 0.11 mm thick. On the other hand, the sheet material may be for example 4-40 mm wide although in some cases it may be preferred that the sheet material is 4-12 mm wide. Other sizes are of course possible depending on requirements and/or applications.

Further mechanical properties that have been found to be suitable for optimal performance of the sheet material in the automotive field are listed below:
- Adhesion: 3-8 N/cm, such as 4 or 4.5 N/cm, with 5.9 N/cm being preferred;
- Tensile strength: 25-75 N/cm, such as 33.8 or 65 N/cm, with 54 N/cm being preferred;
- Elongation at break: 3-10%, such as 5%; with 7% being preferred;
- Steam transfer coefficient: 0.5-2 g/m²/24h, such as 0.77 g/m²/24h, with 1.55 g/m²/24h being preferred; and
- Coefficient of thermal expansion: ±15% of that of the housing part, for example 2.4.10⁻⁵ °C⁻¹ for aluminum or 1.7.10⁻⁵ °C⁻¹ for copper.

In one possible example of the present housing assembly, the sheet material may be made integral with at least one of the first housing part or the second housing part. In this case, the sheet material is an integral part of the housing assembly.

A method for making a vehicle camera housing assembly is also described herein. The method comprises providing at least a first housing part and a second housing part, and bringing them close together. The method further comprises winding an adhesive sheet material, such as a curable adhesive sheet material, at least once around at least one outer portion of the first and second housing parts completely surrounding them for permanently joining them together so as to define an inner space suitable to hold electronics components therein. The sheet material may be thus wound once or more times around an outer perimeter of the first part and/or the second housing part depending on requirements.

Heat may be applied if required for curing the sheet material. This may be carried out once the adhesive sheet material has been wound around at least one outer portion of the first and second housing parts.

The step of bringing the first and second housing parts close together may involve forming a gap defined by a spacing there between. As described above, said spacing between the first housing part and the second housing part substantially corresponds to or is shorter than the width of the sheet material.

With the present motor vehicle camera housing assembly, reliable joining between housing parts is advantageous obtained. The joining means are arranged completely surrounding the housing parts permanently joining them together. Improved heat dissipation is also obtained as compared with known housing assemblies since less material is required for making the present housing assembly. This also involves reduced weight due to reduced housing wall thickness. As a result of this, the space available inside the housing is advantageously increased. Overall camera size can be thus reduced as well as assembly times and costs.

### BRIEF DESCRIPTION OF THE DRAWING

A non-limiting example of the present disclosure will be described in the following, with reference to the appended drawing.

In the drawings:
Figure 1 is an elevational sectional view of one example of the present motor vehicle camera housing assembly; and
Figure 2 is a fragmentary view of figure 1 showing the recess in the housing parts.

### DETAILED DESCRIPTION OF THE EXAMPLE

In the drawing, the motor vehicle camera housing assembly 100 comprises a first housing part or front housing 110 and a second housing part or back housing 120. The front housing 110 and the back housing 120, that together form the housing assembly 100, are arranged with their respective longitudinal axes x1, x2 aligned with each other. When the front housing 110 and the back housing 120 are joined together, an inner space 130 is defined therein for housing electronics components 300 of a camera, such as for example a parking camera, not shown in the drawing for the sake of clarity.

The housing assembly 100 further comprises joining means 200 for joining the front housing 110 and the back housing 120 together so as to define said inner space 120. The joining means 200 comprise a curable adhesive tape 210 and preferably an extremely sealing tape 210 for ensuring sealing conditions in the housing assembly 100. The use of an extremely sealing tape 210 prevents fluids from entering between the front housing 110 and the back housing 120. The adhesive sealing tape 210 in this non-limiting example has a thickness W of 0.07 - 0.11 mm, and is made from a rigid material suitable for avoiding tensile elongations but also somewhat malleable so as to have good adaptability to the outer surface of the front housing 110 and the back housing 120. The adhesive sealing tape 210 is also fluid and dust tight, heat-resistant, capable of withstanding temperatures in the range of about -40° and 150°C as well as the attack of external agents such as chemicals, saline mist, etc. This is beneficial since the camera to be received in the housing assembly 100 is intended to be fitted in a motor vehicle and thus under weathering conditions. In the present non-limiting example, the adhesive sealing tape 210, the front housing 110, and the back housing 120 are all made from aluminum. Other resistant, conductive, and heat dissipating materials such as copper are envisaged.

In the present non-limiting example, the adhesive sealing tape 210 is made from the same material as the front housing 110 and the back housing 120, for example aluminum. Although this is preferred since respective coefficients of thermal expansion are all similar, such that the housing assembly 100 behaves as a block under temperature changes, those skilled in the art will readily recognize that the sealing adhesive tape 210, the front housing 110, and the back housing 120 could be made from other different materials from each other and other than aluminum.

The adhesive sealing tape 210 may have one or both opposite adhesive surfaces 215, 216 made from an adhesive material whose adhesive properties are not altered by temperature or other conditions during use.

The adhesive sealing tape 210 of the joining means 200 in the present example is wound once around the outer surface 115, 125 of the front housing 110 and the back housing 120, respectively. In other examples, the adhesive sealing tape 210 may be wound twice or more times around an outer surface 115, 125 of the front housing 110 and the back housing 120 when increased strength and rigidity are required. In any case, the adhesive sealing tape 210 is wound around the front and back housings 110, 120 completely surrounding them such that they are joined together permanently.

According to a first example, when the motor vehicle camera housing assembly 100 is in an assembled condition, the front housing 110 and the back housing 120 abut to one another. The front housing 110 and the back housing 120 may be arranged flush.

According to a second example, when the motor vehicle camera housing assembly 100 is in an assembled condition, the front housing 110 and the back housing 120 do not come into contact with each other and a gap 400 exists therebetween. The gap 400 is defined by a spacing S between the front housing 110 and the back housing 120. Spacing S in the present example is substantially shorter than the width T of the adhesive sealing tape 210. Spacing S may be continuous, for example if the end portions of the front housing 110 and the back housing 120 are seamlessly configured respectively. However, spacing S may be not continuous, for example, when the front housing 110 and the back housing 120 are provided with portions extending to one another and contacting each other, between which clearances exist.

In this second example where a gap 400 exists between the front housing 110 and the back housing 120, a curing process is performed on the adhesive sealing tape 210 by applying heat thereon with laser until the housing part where the camera is to be received has been formed. In this example, it is preferred that the adhesive sealing tape 210 is wound twice or more times around an outer surface 115, 125 of the front housing 110 and the back housing 120 so as to provide mechanical rigidity. Increasing the number of times the sealing tape 210 is wound around the front and back housings 110, 120 increases not only mechanical rigidity but also electromagnetic compliance as well as thermal dissipation.

Making the above described camera housing assembly 100 comprises providing the front housing 110 and the back housing 120 and bringing them close together until a spacing S is defined there between. A camera and its respective electronics components, not shown, can be fitted within an inner space 130 defined inside the front and back housings 110, 120. The above described adhesive sealing tape 210 is then wound once or more times around an outer surface or perimeter of both the front housing 110 and the back housing 120 completely surrounding them. The adhesive sealing tape 210 is wound around the front and back housings 110, 120, for example helically, such that they are permanently joined together, keeping them rigidly attached to one another ready for use in a motor vehicle. The width T of the adhesive sealing tape 210 is substantially greater than the above mentioned spacing S defined between the front housing 110 and the back housing 120.

It may be preferred that the above mentioned gap or spacing 400 between the front housing 110 and the back housing 120 is equal to, or less than ¾ the width T of the adhesive sealing tape 210.

According to a third example, a rapid welding is performed between the front housing 110 and the back housing 120 for example discontinuously on specific points, such as for example on four preset points. The adhesive sealing tape 210 is then applied which in this case would act as a sealing means for the front housing 110 and the back housing 120.

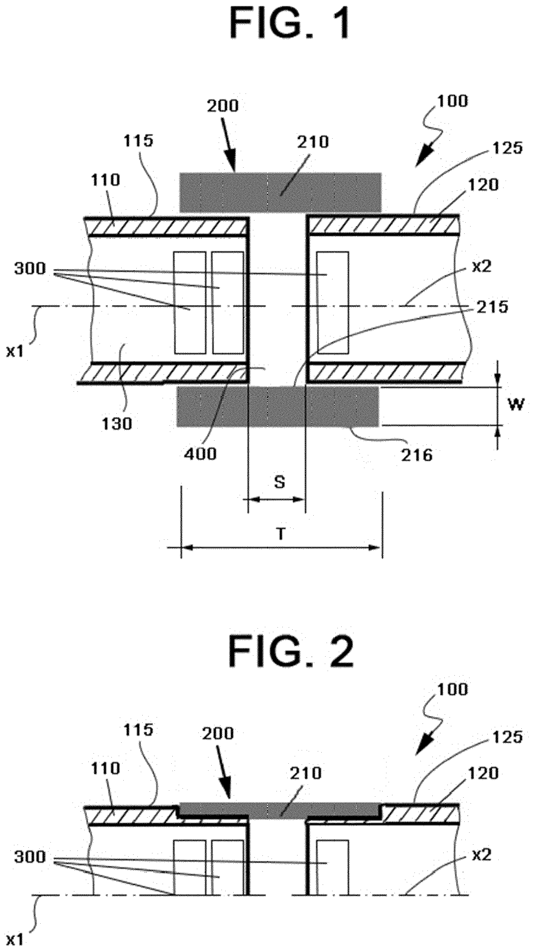

In the above examples, a recess 500 is formed at one end portion of said first and second housing parts 110, 120 for receiving the adhesive sheet material 210, as shown in figure 2.

In any case, a small amount of sealing liquid may be applied on tape overlapping areas. Sealing robustness can be thus increased while the chance that an improperly pressurized overlap might leave a gap is decreased.

For most surfaces, a cleaning operation may be performed by using a 50:50 mixture of isopropyl alcohol (IPA) and water. Other examples of course are not ruled out.

Although only a number of examples have been disclosed herein, other alternatives, modifications, uses and/or equivalents thereof are possible. Furthermore, all possible combinations of the described examples are also covered. For example, even though from above description it is understood that the adhesive sealing tape is applied to the front and back housings as single, continuous sheet material, other different tape arrangements could be applied such as for example single lengths or segments of adhesive sealing tape to be wound around the front housing 110 and the back housing 120 for joining them together permanently. The scope of the present disclosure is therefore not limited by the particular example described above, but should be determined only by a fair reading of the claims that follow.

Reference signs related to drawings placed in parentheses in the claims are solely for attempting to increase their intelligibility, and shall not be construed as limiting the scope of the claim.

## Claims

1. A motor vehicle camera housing assembly (100), comprising at least a first housing part (110), a second housing part (120), and joining means (200) for joining the first and second housing parts (110, 120) together so as to define an inner space (130) suitable to hold electronics components (300) therein, wherein the joining means (200) comprise an adhesive sheet material (210) wound at least once around at least one outer portion of said first and second housing parts (110, 120), completely surrounding them so as to permanently join the first and second housing parts (110, 120) together.

2. The assembly (100) according to claim 1, wherein the joining means (200) comprise a curable adhesive sheet material (210).

3. The assembly (100) according to claim 1 or 2, wherein the first and second housing parts (110, 120) are aligned with each other.

4. The assembly (100) according to any of the claims 1-3, wherein the sheet material (210) has two opposite adhesive surfaces (215, 216).

5. The assembly (100) according to any of the claims 1-4, wherein at least one of the first housing part (110), the second housing part (120), and the sheet material (210) is/are made from a material selected from at least one of: a heat dissipating material, a rigid material, a malleable material, or a wear-resistant material.

6. The assembly (100) according to any of the claims 1-5, wherein the sheet material (210) is made from metal.

7. The assembly (100) according to claim 6, wherein the sheet material (210) is made from aluminum.

8. The assembly (100) according to any of the claims 1-7, wherein the sheet material (210) is made from the same material as at least one of the first and second housing parts (110, 120).

9. The assembly (100) according to any of the claims 1-8, wherein a gap (400) is defined by a spacing (S) between the first housing part (110) and the second housing part (120).

10. The assembly (100) according to claim 9, wherein said spacing (S) between the first housing part (110) and the second housing part (120) substantially corresponds to or is shorter than a width (T) of the sheet material (210).

11. The assembly (100) according to any of the claims 1-10, wherein the sheet material (210) is 0.07 - 0.11 mm thick.

12. The assembly (100) according to any of the claims 1-11, wherein the sheet material (210) is 4-40 mm wide.

13. The assembly (100) according to any of the claims 1-12, wherein a recess (500) is formed at respective end portions of the first and second housing parts (110, 120) for receiving the adhesive sheet material (210).

14. The assembly (100) according to any of the claims 1-13, wherein the sheet material (210) is made integral with at least one of the first housing part (110) or the second housing part (120).

15. A method for making a vehicle camera housing assembly (100), comprising:
- providing at least a first housing part (110) and a second housing part (120);
- bringing said first and second housing parts (110, 120) close together; and
- winding an adhesive sheet material (210) at least once around at least one outer portion of the first and second housing parts (110, 120), completely surrounding them for permanently joining them together so as to define an inner space (130) suitable to hold electronics components (300) therein.
